# EUROPÄISCHE PATENTSCHRIFT

(11) **EP 1 188 936 B1**
(45) Veröffentlichungstag und Bekanntmachung des Hinweises auf die Patenterteilung: **02.03.2011**
(21) Anmeldenummer: 01121217.2
(22) Anmeldetag: 05.09.2001
(51) Int. Cl.: F16B 21/12, F16B 21/07, F16B 5/06

(54) **Verbindungsanordnung zum lösbaren Verbinden zweier Bauteile**
Connection assembly for the releasable joining of two elements
Assemblage de connection pour la fixation amovible de deux éléments

(30) Priorität: 13.09.2000 DE 20015848 U
(43) Veröffentlichungstag der Anmeldung: 20.03.2002
(73) Patentinhaber: SFS intec Holding AG, 9435 Heerbrugg (CH)
(72) Erfinder: Schwarz, Helmut, 71263 Weil der Stadt (DE)

(56) Entgegenhaltungen:
- DE-U- 29 920 498
- DE-U- 29 920 499
- US-A- 2 995 969
- US-A- 3 896 698

## Beschreibung

Die Erfindung bezieht sich auf eine Verbindungsanordnung zum lösbaren Verbinden zweier Bauteile mit einem Halte-Bolzen, einer Halte-Feder-Anordnung, einem Entriegelungs-Teil und einem Auslöse-Stift, bei der das Entriegelungs-Teil verschieblich auf dem Halte-Bolzen angeordnet ist und welches durch den im Halte-Bolzen axial verschiebbaren Auslöse-Stift betätigt wird.

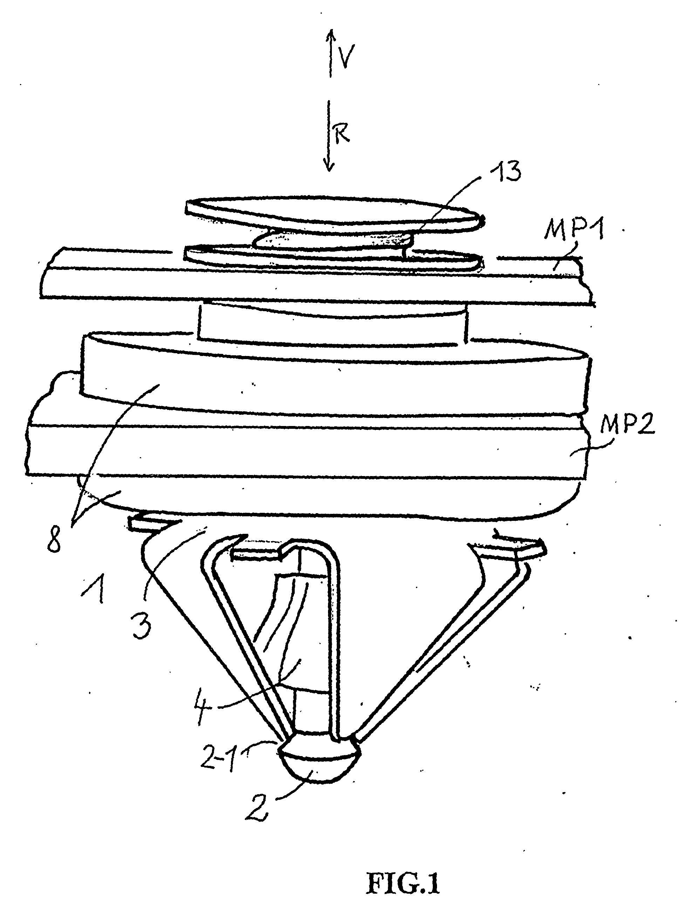

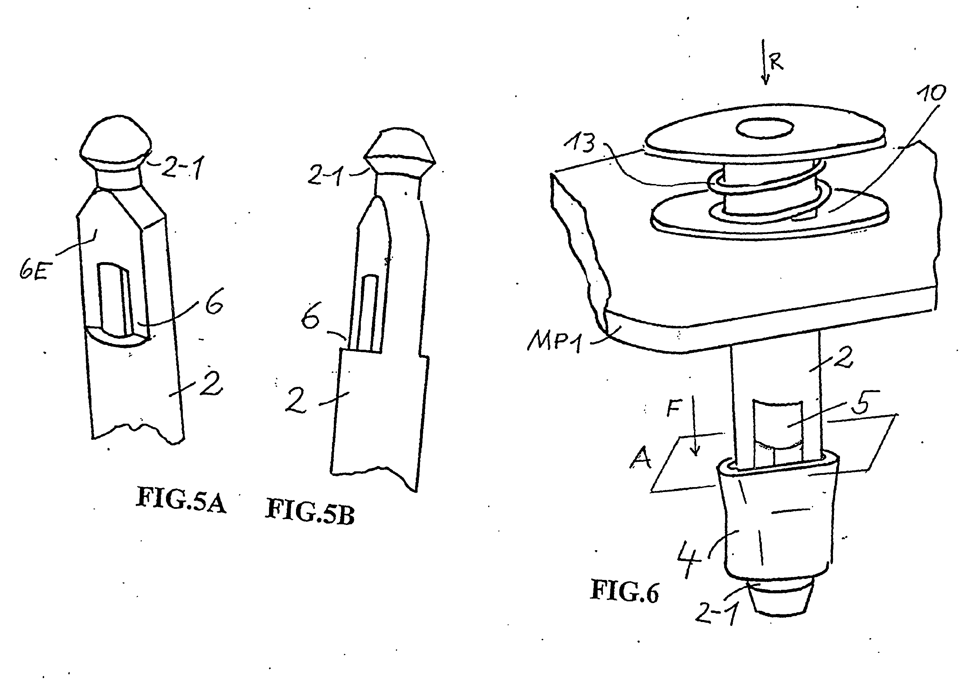

Die US-A-2 995 969 offenbart gemäss Fig. 1 und 6 eine Verbindungsanordnung zum lösbaren Verbinden zweier mit aufeinander ausgerichteten Öffnungen versehener Bauteile, bei der in der Bohrung des einen zu verbindenden Bauteils ein Halte-Bolzen angeordnet ist, welcher durch die Öffnung des anderen Bauteils hindurchragt und eine ringförmige Haltenut oder einen ringförmigen Eingriffsbereich aufweist, in welche(n) beim
Eindrücken des Halte-Bolzens in eine mit dem zweiten Bauteil in Verbindung stehende Haltefederanordnung das freie Ende mindestens eines Blattfederarmes eingreift, und wobei auf dem Halte-Bolzen ein verschiebliches Entriegelungs-Teil zur Lösung des Eingriffs des Blattfederarmes in der Haltenut des Halte-Bolzens vorgesehen ist, und wobei im Halte-Bolzen ein axial verschieblicher Auslöse-Stift vorgesehen ist, durch den das Entriegelungs-Teil im Bereich eines
Wandungsdurchbruches im Halte-Bolzen betätigbar ist, wobei das Entriegelungs-Teil nicht fest mit dem Auslöse-Stift verbunden ist.

Eine solche zum Stand der Technik gehörende Verbindungsanordnung ist auch im Deutschen Gebrauchsmuster 299 204 98.7 beschrieben.

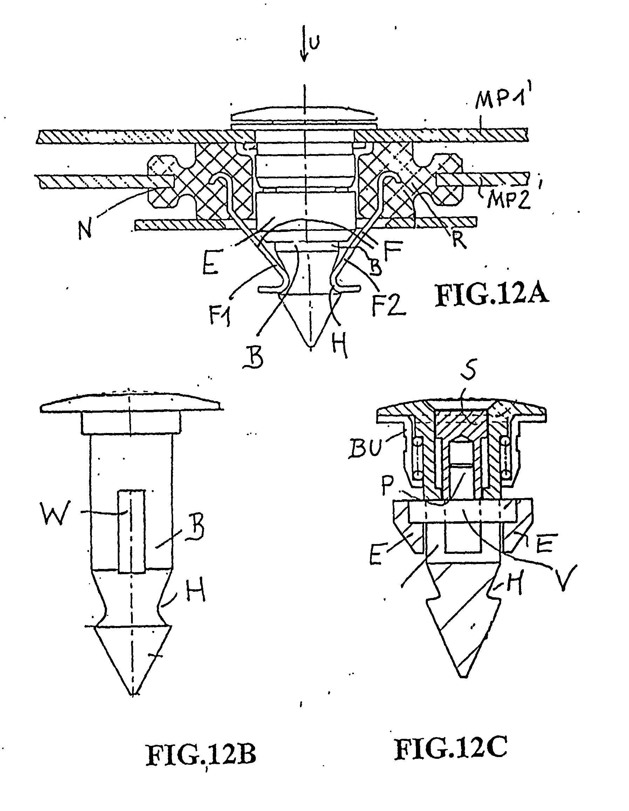

Diese Verbindungsanordnung nach dem Stand der Technik ist in den FIG. 12A, 12B und 12C dargestellt:
Es handelt sich dabei um eine Verbindungsanordnung zum lösbaren Verbinden zweier mit fluchtenden Öffnungen versehener Bauteile MP1' und MP2' , bei der in einer mit dem ersten Bauteil MP1' verbundenen Buchse BU ein Halte-Bolzen B angeordnet ist.

Dieser Halte-Bolzen B ragt durch die Öffnung des zweiten Bauteils MP2' hindurch. An seinem Ende hat der Halte-Bolzen B eine ringförmige Haltenut H , in welche beim Eindrücken des Halte-Bolzens B in eine mit dem zweiten Bauteil MP2' in Verbindung stehende Blattfederanordnung F die Enden der freien Blattfederarme F1 und F2 eingreifen.

Der Auslöse-Stift S ist mittels eines Quersteges V fest mit dem auf dem Halte-Bolzen H verschieblich angeordneten Entriegelungs-Teil E verbunden.

Der Quersteg V verläuft dabei durch fensterartige Durchbrüche W in der Halte-Bolzen-Wandung, die zugleich als Führungsbahn dienen.

Zur Verbindung beider Bauteile MP1' und MP2' wird der Halte-Bolzen H mit seiner konisch verlaufenden Bolzenspitze in Richtung U gedrückt; dabei werden die Enden der Blattfedern F1 und F2 nach außen gepreizt bis sie schließlich in die Haltenut H "einrasten".

Der Schwingungsdämpferring R weist einen peripheren Wulst mit einer Nut N zur Aufnahme des zweiten Bauteil MP2' auf; in dieser Nut wird der Rand der Öffnung im zweiten Bauteil MP2' aufgenommen.

Die Darstellung gemäß FIG. 12 C verdeutlicht die Befestigung des außerhalb des Halte-Bolzens H angeordneten Entriegelungs-Teils E mit dem innerhalb des Halte-Bolzens B geführten Auslöse-Stift S.

Das Entriegelungs-Teil E ist fest mit dem Quersteg V verbunden, welcher in der fensterartigen Aussparung W (FIG. 12 B) der Halte-Bolzen-Wandung geführt wird. Der Quersteg V ist mittels eines fest mit ihm verbundenen Befestigungs-Stiftes p mit dem Auslöse-Stift S verbunden (Der Befestigungs-Stift p ist bleibend in einer Bohrung des Auslöse-Stiftes S eingedrückt).

Die ringförmige Haltenut H erfordert eine Blattfederanordnung mit mindestens zwei, vorzugsweise drei Blattfederarmen, die umfangmäßig möglichst gleichmäßig verteilt sind.

Die Blattfederarme verjüngen sich zu ihrem freien Ende hin. Sie haben eine gemeinsame Basis (s. FIG.5, DE 299 204 98.7).

Bei einer Verschiebung des Auslöse-Stiftes S in dem Halte-Bolzen B verschiebt sich das Entriegelungs-Teil E auf dem Halte-Bolzen, soweit es die Länge des Durchbruches W gestattet.

Soll die Verbindungsanordnung für die beiden Bauteile MP1' und MP2' gelöst werden (ein Bauteil ist mit dem Halte-Bolzen B, das andere mit einer Blattfederanordnung F direkt oder indirekt verbunden), wird der Auslöse-Stift S im Halte-Bolzen B in Richtung U gedrückt, bis das Entriegelungs-Teil E die Enden der Blattfederarme F1 und F2 aus der Haltenut H (besser: aus dem Eingriffsbereich) spreizt.

Für ein störungsfreies Auseinanderspreizen der Blattfederenden ist es wichtig, daß diese auf dem Halte-Bolzen-Konus unter zunehmenden Federdruck störungsfrei entlanggleiten können, ohne dabei auf unerwünschte bewegungsstockende Widerstände wie Absätze, Kanten oder Spalte zu geraten.

Eine solche Verbindungsanordnung hat neben dem schnellen Verbindungsaufbau den Vorteil der einfachen Demontage der Bauteile für Wartungsarbeiten und Reparaturen.

Derartige Verbindungsanordnungen werden vorzugsweise in Flugzeugen und Kraftfahrzeugen zur Befestigung von Innenverkleidungen eingesetzt.

Die vorgenannte Verbindungsanordnung nach dem Stand der Technik weist jedoch folgende Nachteile auf: Kosten- und Konstruktions-Aufwendigkeit.

Zur Vermeidung dieser Nachteile ist es Aufgabe der Erfindung, eine verbesserte Verbindungsanordnung vorzusehen.

Desweiteren ist es Aufgabe der Erfindung, auch für eine solche Verbindungsanordnung eine besonders wirksame und leicht herzustellende Blattfederanordnung vorzusehen, die ebenso auch für andere Verbindungsanordnungen mit ringförmiger Haltenut eingesetzt werden kann.

Es ist auch Aufgabe der Erfindung, die erfindungsgemäße Verbindungsanordnung schwingungsdämpfend auszugestalten.

Diese Aufgaben der Erfindung werden in vorteilhafter Weise durch die in Anspruch 1 genannten Merkmale gelöst.

Vorteilhafte Weiterbildungen der Erfindung sind in den Unteransprüchen gekennzeichnet.

Ausführungsbeispiele der Erfindung sind in den Zeichnungen dargestellt und werden im folgenden näher beschrieben.

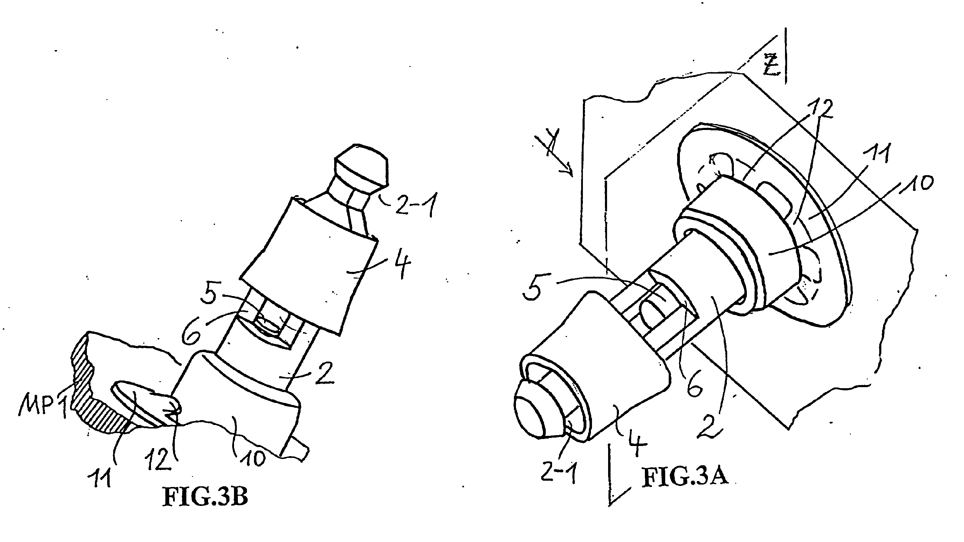

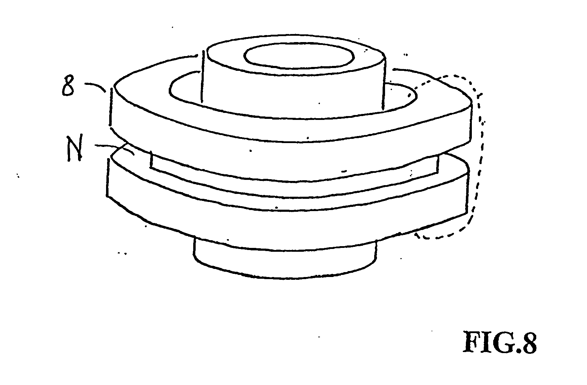

Es zeigen:
FIG. 1
   eine schematische perspektivische Darstellung einer erfindungsgemäßen Verbindungsanordnung für die Verbindung zweier Bauteile , wobei das zweite Bauteil von einem Schwingungsdämpferring getragen wird;
FIG. 2 A , FIG. 2B und FIG. 2C
   perspektivische Darstellungen einer Haltefederanordnung mit einer hohlzylinderähnlichen Buchse zur Aufnahme eines Schwingungsdämpferrings gemäß FIG. 8;
FIG. 3A und FIG.3B
   perspektivische Darstellungen eines Halte -Bolzens und eines auf ihm verschieblichen Entriegelungs-Teils, welches durch einen axial im Halte-Bolzen verschieblichen Auslöse-Stift betätigbar ist;

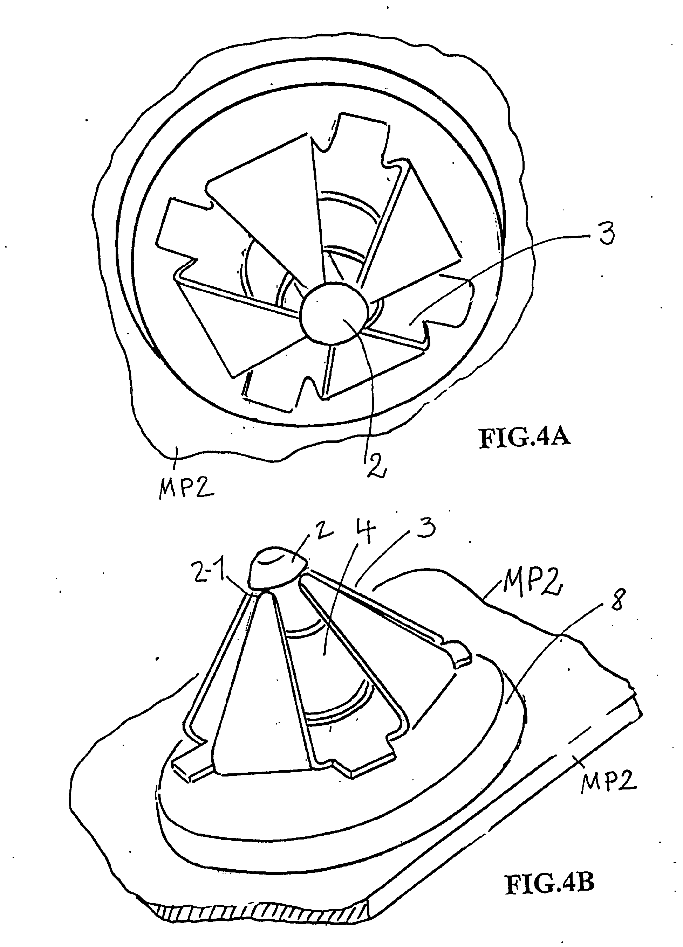

FIG. 4A und FIG. 4B perspektivische Darstellungen einer Haltefederanordnung, welche auf der Unterseite eines mit dem zweiten Bauteil verbundenen Schwingungsdämpferringes angeordnet ist;
FIG. 5A und FIG. 5B
   perspektivische auszugsweise Darstellungen des Halte-Bolzens mit seitlichen Aussparungen und mit einer Axialbohrung zur Aufnahme des Auslöse-Stiftes;
FIG. 6
   eine perspektivische Darstellung des mit dem ersten Bauteils verbundenen Halte-Bolzens mit Entriegelungs-Teil;
FIG. 7 A
   eine Schnittansicht durch die in FIG.6 gezeigte Anordnung zur Darstellung der Betätigung des Entriegelungs-Teiles durch den Auslöse-Stift;
FIG. 7 B
   eine auszugsweise Schnittansicht durch die in FIG.3A gezeigte Anordnung zur Darstellung der Betätigung des Entriegelungs-Teiles durch den Auslöse-Stift;
FIG. 8
   eine perspektivische Darstellung des Schwingungsdämpferringes;
FIG.9
   eine Teil-Schnittansicht einer anderen Ausführungsform der erfindungsgemäßen Verbindungsanordnung mit einem Halte-Bolzen, einem Auslöse-Stift und einem Entriegelungs-Teil mit Federhaken;

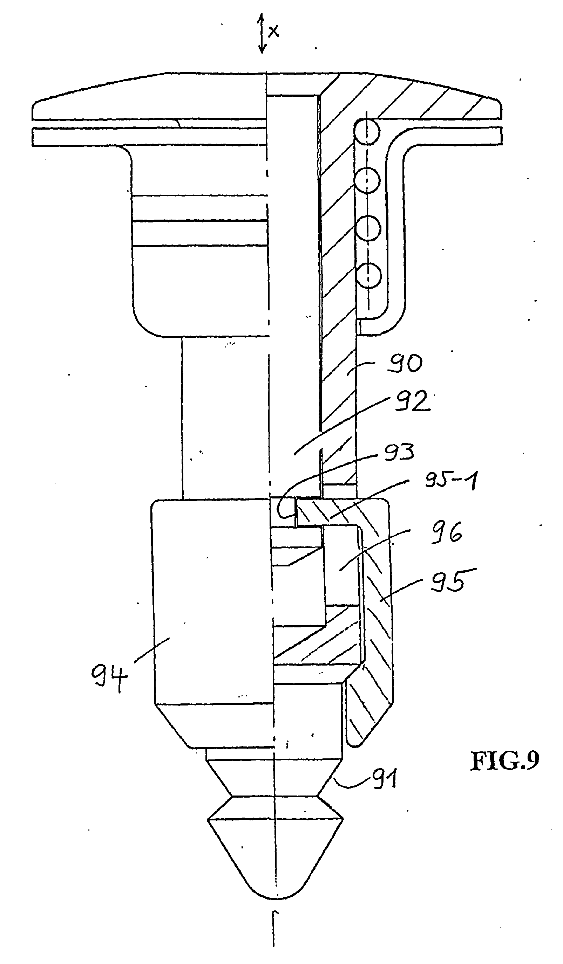

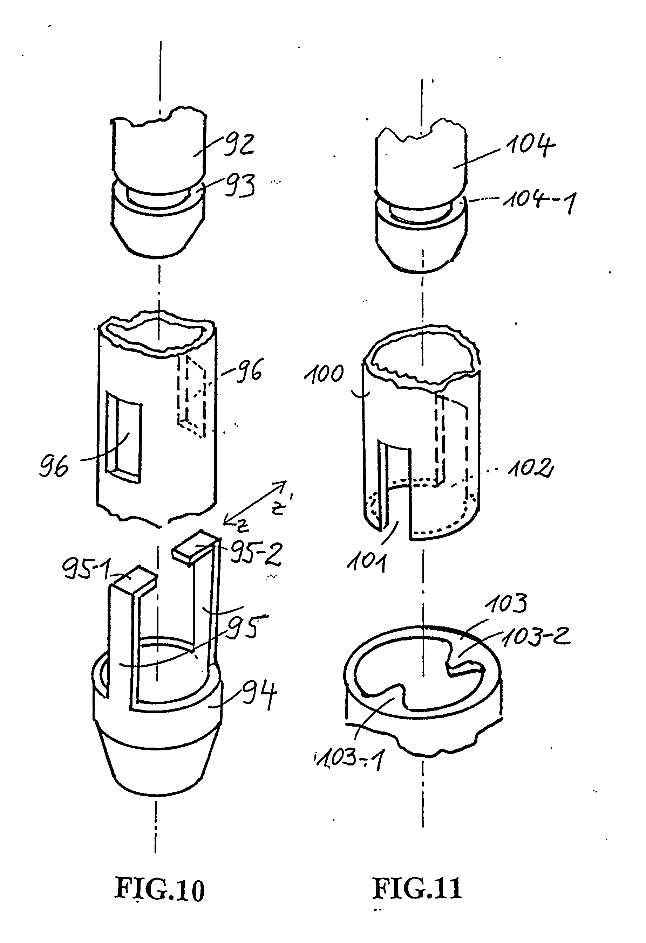

FIG.10 eine schematische ausschnittsweise perspektivische Explosionsdarstellung der Verbindungsanordnung gemäß FIG. 9;
FIG.11
   eine schematische ausschnittsweise perspektivische Explosionsdarstellung einer weiteren Ausführungsform der erfindungsgemäßen Verbindungsanordnung mit einem Halte-Bolzen, einem Auslöse-Stift und einem ringförmigen Entriegelungs-Teil mit einwärts gerichteten Vorsprüngen;
FIG. 12 A, FIG. 12B, FIG. 12C
   Darstellungen einer Verbindungsanordnung nach dem Stand der Technik mit einem Halte-Bolzen und einem Auslöse-Stift, welcher über einen Quersteg fest mit einem auf dem Halte-Bolzen verschieblich angeordneten Entriegelungs-Teil verbunden ist.

FIG. 1 zeigt
eine schematische perspektivische Darstellung einer erfindungsgemäßen Verbindungsanordnung für die Verbindung zweier Bauteile MP1 und MP2 , wobei das zweite Bauteil MP2 von einem Schwingungsdämpferring 8 getragen wird.

Der Halte-Bolzen 2 ist -wie auch in Zusammenhang mit FIG.3A und FIG. 6 dargestellt- im ersten Bauteil MP1 angeordnet.

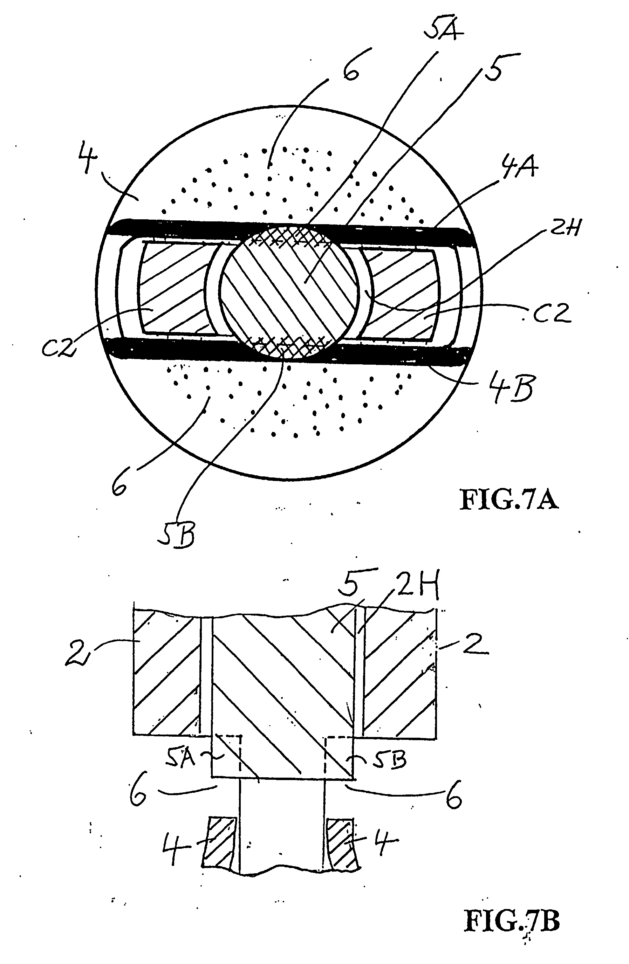

Die Haltefederanordnung 3 liegt an der unteren Seite des Schwingungsdämpferringes 8 an. Die freien Enden der Blattfederarme greifen in die "Haltenut" 2-1 (besser Eingriffsbereich) des Halte-Bolzens 2 ein. Auf dem Halte-Bolzen ist verschieblich das Entriegelungsteil 4 angeordnet. Es wird von einem in dieser Darstellung nicht ersichtlichen Auslöse-Stift (FIG. 3A, FIG.7) betätigt, welcher im Innern des Halte-Bolzens 2 axial verschieblich angeordnet ist.

Bei einer Bewegung des Entriegelungs-Teils 4 in Richtung R werden die Enden der Haltefederarme gespreizt: dann löst sich die Verbindung; die Druckfeder 13 schiebt den Halte-Bolzen in Richtung V und die Bauteile können voneinander getrennt werden. Das Zusammenwirken der einzelnen Bauelemente der Verbindungsanordnung geht aus anderen Darstellungen hervor.

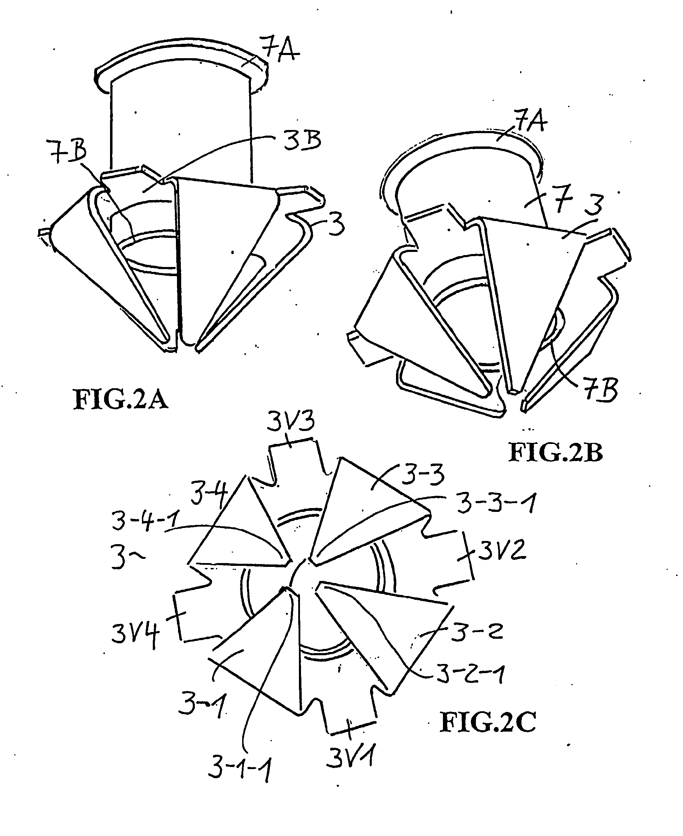

Die Figuren FIG. 2 A , FIG. 2B und FIG. 2C zeigen perspektivische Darstellungen einer erfindungsgemäßen stumfkegel-dach-ähnlichen Haltefederanordnung 3 mit vier Blattfederarmen 3-1, 3-2, 3-3 und 3-4 .

Die Haltefeder-Anordnung weist wahlweise (für die Verwendung eines Schwingungsdämpferringes) eine hohlzylinderähnliche Buchse 7 zur Ausnahme des in FIG. 8 dargestellten Schwingungsdämpferringes auf.

Die Blattfederanordnung (3) hat ein Basisteil (3B), von dessen Außenrand vier sich zu ihren freien Enden hin verjüngende und dachartig nach innen geneigte Blattfederarme (3-1, 3-2, 3-3, 3-4) ausgehen.

Die freien Enden der Blattfederarme sind einander zugeneigt. Sie bilden Segmente eines gedachten Hohlstumpf-Kegels. Der obere Rand 3-1-1 ihres freien Endes verläuft in Aufsicht vorzugsweise kreisringsegmentförmig, passend für einen formschlüssigen Eingriff in die ringförmige Haltenut 2-1 des Halte-Bolzens 2.

Ihre freien Enden (3-1-1, 3-2-1, 3-3-1, 3-4-1) greifen in die ringförmige Haltenut 2-1 des Halte-Bolzens 2 ein, sobald dieser in Pfeilrichtung R (FIG.1) in die Haltefederanordnung 3 gedrückt wird. Beim Hindurchführen des Kopfes des Halte-Bolzens 2 federn die freien Enden der Blattfederarme nach außen, bis sie schließlich in die Haltenut 2-1 "einrasten".

Das in dieser Ausführungsform eben gestaltete Basisteil 3B weist nach außen weisende Vorsprünge 3V1, 3V2,3V3, 3V4 auf.

Diese dienen im zusammengebauten Zustand der Verbindungsanordnung bezüglich der Öffnung im zweiten Bauteil MP2 als Anschlag, damit bei einer Zugbelastung in Richtung V (FIG. 1) der Schwingungsdämpferring 8 und insbesondere die Haltefederanordnung 3 nicht durch die Öffnung im zweiten Bauteil MP2 hindurchgezogen werden können.

Die Haltefederanordnung 3 ist vorzugsweise einteilig und aus Federstahlblech hergestellt.

Das Basisteil 3B der Haltefederanordnung 3
weist eine mittige Öffnung zur Aufnahme einer hohlzylinderähnlichen Buchse 7 auf.

Im zusammengebauten Zustand ist diese Buchse 7 in der Öffnung des Schwingungsdämpferinges 8 (FIG.8) angeordnet.

Die Öffnungen der Buchse (7) haben jeweils einen nach auswärts weisenden Rand 7A und 7B. Sie verhindern ein Herausgleiten der Buchse aus der Öffnung im Basisteil 3B der Haltefederanordnung 3 . Zwischen dem oberen Rand 7A der Buchse 7 und der Basis 3B der Haltefederanordnung 3 wird der Schwingungsdämpferring 8 angeordnet.

Der Schwingungsdämpferring (8) aus elastischen Material weist eine konzentrisch zu seiner Achse angeordnete periphere Nut (N) auf zur Aufnahme des Randes der Öffnung im zweiten Bauteil MP2.

Der Schwingungsdämpferring verhindert die ungedämfte Übertragung von Schwingungen zwischen den Bauteilen .

Die Schwingungen werden durch die Elastizität des Materials des Schwingungsdämpferringes und durch die Schwingfähigkeit seines schmalhalsigen Wulstes gedämpft.

Die Figuren FIG. 3A und FIG.3B
zeigen perspektivische Darstellungen des Halte -Bolzens 2 und des auf ihm verschieblichen Entriegelungs-Teils 4, welches durch einen axial im Halte-Bolzen 2 verschieblichen Auslöse-Stift 5 betätigbar ist;

Der Halte-Bolzen 2 ist in einer Buchse 10 geführt, welche in der Öffnung des ersten Bauteiles MP1 angeordnet ist. Diese Buchse 10 hat auf der Oberseite des ersten Bauteiles einen Außenrand (FIG.1). Auf der Unterseite des ersten Bauteiles MP1 ist die Buchse durch einen Sicherungsring 11 fixiert, dessen nach innen ragende federnde Rastelemente 12 in eine äußere Haltenut der Buchse 10 eingreifen.

In der Buchse 10 ist der Halte-Bolzen 2 geführt.

Auf dem Halte-Bolzen 2 ist das Entriegelungs-Teil 4 verschieblich angeordnet.

Der Halte-Bolzen 4 weist eine axiale Bohrung auf zur Aufnahme eines verschieblichen Auslöse-Stiftes 5.

Um vom Entriegelungs-Teil 4 von der Bolzenaußenseite eine Zugangsmöglichkeit zu diesem Auslöse-Stift 5 zu erhalten, weist der Halte-Bolzen zwei einander gegenüberliegende Wandungsdurchbrüche 6 auf. Diese sind so ausgeführt, daß Teile der Stirnfläche des Auslöse-Stiftes 5 in den Aussparungsraum 6 der Wandungsdurchbrüche hineinragen, um dort auf das Entriegelungs-Teil 4 einzuwirken.

Das Entriegelungsteil (4) ist ein verformter Hohlzylinder , dessen eines Ende, welches der ringförmigen Haltenut (2-1) des Halte-Bolzens 2 abgewandt ist, in den Bereich des Wandungsdurchbruches (6) eingedrückt ist , wobei Teile des eingedrückten Entriegelungs-Teiles 4 auf Stirnflächenteile des Auslöse-Stiftes 5 ausgerichtet sind, welche in den Aussparungsraum 6 des Wandungsdurchbruches hineinragen.

Die Figuren FIG. 4A und FIG. 4B zeigen
perspektivische Darstellungen der Haltefederanordnung 3, welche (FIG.1) auf der Unterseite des mit dem zweiten Bauteil MP2 verbundenen Schwingungsdämpferringes 8 (FIG.8) angeordnet ist.

Der Halte-Bolzen 2 verläuft durch die Buchse 7 auf welcher der Schwingungsdämpferring 8 angeordnet ist. Das Basisteil 3B der Haltefederanordnung 3 liegt an der Unterseite des Schwingungsdämpferrings 8 an. Die Enden der freien Blattfederarme greifen in die Haltenut 2-1 des Halte-Bolzens 2 ein. Das Entriegelungs-Teil 4 würde bei einer Bewegung in Richtung R die Enden der freien Blattfederarme aus ihrer Eingriffsposition spreizen, wonach die Verbindung beider Bauteile gelöst werden kann. Die Figuren FIG. 5A und FIG. 5B zeigen
perspektivische auszugsweise Darstellungen des Halte-Bolzens 2 mit seitlichen Aussparungen 6 und mit einer Axialbohrung zur Aufnahme des Auslöse-Stiftes 5.

Diese seitlichen Aussparungen 6 sind in der Ausführungsform des Halte-Bolzens 2 gemäß FIG. 5A und FIG.5B als äußere Abfräsung ausgeführt, wobei die gedachte Abfräsungsebene 6E den Bereich der Axialbohrung für den Auslöse-Stift schneidet. Auf diese Weise wird erreicht, daß der von der Axialbohrung aufzunehmende Auslöse-Stift 5 zu einem Teil in diesen Aussparungsraum 6 hineinragt, so daß Teile seiner Stirnfläche das Entriegelungs-Teil 4 betätigen können (s. auch Beschreibung zu FIG. 7A und 7B).

FIG. 6 zeigt
eine perspektivische Darstellung des mit dem ersten Bauteil MP1 verbundenen Halte-Bolzens 2 mit dem Entriegelungs-Teil 4.

Wie beits erwähnt wird der Bolzen 2 in der Buchse 10 geführt, welche in einer Öffnung des ersten Bauteils MP1 angeordnet ist. Der Halte-Bolzen 2 kann gegen die Kraft der Feder 13 (FIG.1 und FIG. 6) in Richtung R gedrückt werden. Davon wird Gebrauch gemacht, wenn er (2) in die Haltefederanordnung 3( s. FIG. 4A oder FIG. 4B) "einrasten" soll.

Der in Axialrichtung des Halte.Bolzens 2 verschiebliche Auslöse-Stift 5 kann bleibend in der Bohrung des Bolzens 2 angeordnet sein; es ist aber ebensogut auch möglich, daß der Auslöse-Stift 5 als Werkzeug nur vorübergehend in diese Bohrung eingeführt wird, wenn es gilt, die Verbindungsanordnung zu lösen.

Das auf dem Bolzen verschieblich angeordnete Entriegelungs-Teil 4 hat die Form eines in seinem oberen Bereich in den Aussparungsraum 6 des Bolzens eingedrückten Hohlzylinders. Durch diese Verformung wird erreicht,
daß das Entriegelungs-Teil 4 vom Bolzen 2 nicht abgleiten kann. Die eingedrückten Bereiche wirken wie Anschläge bei einer Verschiebung innerhalb des Aussparungsbereiches- und
daß des Entriegelungs-Teil 4 vom Auslöse-Stift 5 betätigt werden kann - wie im Zusammenhang mit FIG. 7 ausführlicher beschrieben wird.

FIG. 7 A zeigt
eine Schnittansicht durch die in FIG.6 gezeigte Anordnung zur Darstellung der Betätigung des Entriegelungs-Teiles durch den Auslöse-Stift 5;

Die Schnittebene A mit Blickrichtung F verläuft parallel zur Ebene des Bauteils MP1 .Die Schnittflächen des Halte-Bolzens 2 sind schräg schraffiert und mit C2 gekennzeichnet; die Axialbohrung (im Halte-Bolzen 2) ist mit 2H, der Auslöse-Stift mit 5, der gedachte Aussparungsraum 6 ist punktiert und das Entriegelungs-Teil mit 4 gekennzeichnet.

Die in den Aussparungsraum 6 hineinragenden Teile 5A und 5B des Auslöse-Stiftes zeigen Kreuz-Schraffur. Der obere Rand des in den Aussparungsraum 6 eingedrückten Entriegelungsteils 4 ist mit 4A und 4B und schwarz gekennzeichnet.

Das Entriegelungs-Teil 4 kann von dem Auslöse-Stift 5 dort betätigt werden, wo die kreuzschraffierte Fläche des Auslöse-Stiftes auf den oberen Rand 4A und 4B des Entriegelungs-Teils 4 trifft.

FIG. 7 B zeigt
eine auszugsweise Schnittansicht durch die in FIG.3A gezeigte Anordnung zur Darstellung der Betätigung des Entriegelungs-Teiles durch den Auslöse-Stift. Die Schnittebene ist mit Z bezeichnet; die Blickrichtung mit Y.

In der Axialbohrung 2H des Bolzens 2 ist der Auslösestift 5 verschieblich angeordnet.In den Aussparungsraum 6 des Bolzens 2 ragen die Teile 5A und 5B des Auslösestiftes 5. Ihre Stirnkantenflächen treffen bei Verschiebung des Auslöse-Stiftes auf den oberen Rand des in den Aussparungsraum hineingedrückten Entriegelungs-Teiles 4.

FIG. 8 zeigt
eine perspektivische Darstellung des Schwingungsdämpferringes 8. Er ist aus schwingungsdämpfenden Materialien wie z.B. Gummi oder Kunststoff, vorzugsweise Silikon, hergestellt .Die Schwingungsdämpfung ergibt sich aus der Elastizität des Materials und zusätzlich durch die Schwingfähigkeit des schmalhalsigen Wulstes, in welchem eine Nut N angeordnet ist. Diese dient der Aufnahme des zweiten Bauteils (in FIG. 1 mit MP2 gekennzeichnet), indem sie den Rand einer Bohrung im zweiten Bauteil umfaßt. Vorzugsweise ist der Schwingungsdämpferring (aus Gummi) mit dem Bauteil (aus Metall) durch Vulkanisation verbunden.

Die FIG. 9 zeigt
eine Teil-Schnittansicht einer anderen Ausführungsform der erfindungsgemäßen Verbindungsanordnung mit einem Halte-Bolzen 90, einem Auslöse-Stift 92 und einem Entriegelungs-Teil 94 mit Federhaken 95/95-1.

Diese Ausführungsform der erfindungsgemäßen Verbindungsanordnung ist hinsichtlich der Grundfunktion ihrer Teile - daß nämlich der Auslöse-Stift im Haltebolzen indirekt das Entriegelungs-Teil zum Spreizen der Haltefederanordnung betätigt - analog zu der Ausführungsforrm gemäß FIG. 1 zu betrachten.

Aus Vereinfachungsgründen wurde deshalb auch auf die Darstellung der beiden zu verbindenden Bauteile und auf die Darstellung der Haltefederanordnung verzichtet.

Der Halte-Bolzen 90 weist an seinem Ende eine ringförmige Halte-Nut 91 für den Eingriff der Enden nicht dargestellter Blattfederarme der Haltefederanordnung auf. In dem Halte-Bolzen 90 ist axial verschieblich der Auslöse-Stift 92 geführt. Dieser Auslöse-Stift weist eine ringförmige Eingriffsnut 93 auf.

Auf dem Halte-Bolzen ist in Richtung X verschieblich das Entriegelungs-Teil 94 angeordnet. Dieses Entriegelungsteil weist zwei gegenüberliegende sogenannte Federhaken 95 auf, dessen abgewinkelte Enden 95-1 durch die fensterartigen Wandungsdurchbrüche 96 des Halte-Bolzens 90 hindurchragen in in der Eingriffsnut 93 "einrasten".

Bei Verschiebung des Auslöse-Stiftes 92 in Richtung X verschiebt sich gleichermaßen durch die starre Verbindung über die Federhaken das Entriegelungsteil 94 in die gleiche Richtung (zur Spreizung der nichtdargestellten Enden der Blattferderarme der Haltefederanordnung, um die Trennung der zuvor miteinander verbundenen Bauteile zu bewirken).

Zur Verdeutlichung dieses Vorganges sei auch auf die vereinfachte Darstellung in FIG.10 verwiesen.

FIG. 10 zeigt eine schematische ausschnittsweise perspektivische Explosionsdarstellung der Verbindungsanordnung gemäß FIG. 9.

Die Bezugszeichen in FIG.9 sind die gleichen wie in FIG.10 Die Federhaken vermögen in beiden Richtungen Z und Z' zu federn. Dies ermöglicht einen Zusammenbau , in dessen Folge die Hakenenden im zusammengebauten Zustand durch die fensterartigen Wanddurchbrüche 96 hindurchragen und in die Eingriffsnut 93 einrasten. Danach kann die Verbindungsanordnung beliebig oft gelöst oder hergestellt werden. Ein Entfernen der Federhaken aus ihrer "Rastposition" ist dafür nicht mehr erforderlich. Das Entriegelungs-Teil 94 mit den Federhaken 95 wird vorzugsweise aus Kunststoff (im Spritzgußverfahren) hergestellt.

FIG.11 zeigt
eine schematische ausschnittsweise perspektivische Explosionsdarstellung einer weiteren Ausführungsform der erfindungsgemäßen Verbindungsanordnung mit einem Halte-Bolzen 100, einem Auslöse-Stift 104 und einem ringförmigen Entriegelungs-Teil 103 mit einwärts gerichteten Vorsprüngen 103-1 und 103-2.

Bei dieser Ausführungsform der erfindungsgemäßen Verbindungsanordnung - die ebenfalls in ihrer Funktion analog zu der gemäß FIG. 1 bzw FIG.9 zu betrachten ist, weist der Halte-Bolzen 100 keine fensterartigen Durchbrüche auf, wohl aber bis zum Halte-Bolzen-Ende hindurchgehende Schlitze 101, 102.

Das Entriegelungs-Teil 103 ist mit nach innen weisenden Vorsprüngen 103-1, 103-2 versehen, welche im zusammengebauten Zustand durch die Schlitze 101, 102 hindurchragen hindurchragen und in der Eingriffsnut 104-1 des Auslöse-Stiftes 104 gehalten werden.

Die erfindungsgemäße Verbindungsanordnung schließt auch Ausführungsformen ein, bei denen das Entriegelungsteil Vorsprünge aufweist, welche durch Wandungsdurchbrüche des Halte-Bolzens hindurchragen bis in den Bereich der Bohrung im Halte-Bolzen für den Auslöse-Stift. Dort können die Vorsprünge des Entriegelungs-Teiles vom Auslöse-Stift selbst, z.B. durch seine Stirnfläche betätigt werden.

Desweiteren schließt die erfindungsgemäße Verbindungsanordnung auch Ausführungsformen ein, bei denen der Auslösestift oder das Entriegelungsteil beliebig gestaltete Vorsprünge aufweisen, welche in den Aussparungsraum der Haltebolzen-Wandung hineinragen, um dort aufeinanderwirkend die Auslösebewegung des Auslösestiftes auf das Entriegelungsteil zu übertragen.

Allen erfindungsgemäßen Verbindungsanordnungen ist gemeinsam, daß das Entriegelungsteil nicht fest ( fest im Sinne von nicht trennbar) mit dem Auslösestift verbunden ist; eine Rastverbindung, z.B. durch den Eingriff der Federhaken in die Eingriffsnut gemäß FIG. 10 zählt dabei als trennbar , auch wenn von dieser Möglichkeit kein Gebrauch gemacht wird.

Die Erfindung bezieht sich sowohl auf Ausführungen ohne oder mit Schwingungsdämpferring.

## Patentansprüche

1. Verbindungsanordnung zum lösbaren Verbinden zweier mit aufeinander ausgerichteten Öffnungen versehener Bauteile, bei der in der Bohrung des einen zu verbindenden Bauteils (MP1) ein Halte-Bolzen (2) angeordnet ist,
welcher durch die Öffnung des anderen Bauteils (MP2) hindurchragt und eine ringförmige Haltenut oder einen ringförmigen Eingriffsbereich aufweist,
in welche(n) beim Eindrücken des Halte-Bolzens in eine mit dem zweiten Bauteil (MP2) in Verbindung stehende Haltefederanordnung (3) das freie Ende mindestens eines
Blattfederarmes eingreift, und
wobei
auf dem Halte-Bolzen ein verschiebliches Entriegelungs-Teil (4) zur Lösung des Eingriffs des Blattfederarmes in der Haltenut des Halte-Bolzens vorgesehen ist,und
wobei
im Halte-Bolzen ein axial verschieblicher Auslöse-Stift (5) vorgesehen ist, durch den das Entriegelungs-Teil im Bereich eines Wandungsdurchbruches im Halte-Bolzen betätigbar ist,
und das Entriegelungs-Teil (4) nicht fest mit dem Auslöse-Stift (5) verbunden ist
**dadurch gekennzeichnet, daß**
bei Verschiebung des Auslöse-Stiftes (5) in Richtung der Haltefederanordnung (3) ein Teil (5A, 5B) oder ein Vorsprung dieses Auslöse-Stiftes
(5) in den Bereich des Wandungsdurchbruches (6) hineinragt und daß
das Entriegelungs-Teil (4) oder ein Vorsprung desselben in den Bereich des Wandungsdurchbruches (6) hineinragt,
und daß
das Entriegelungs-Teil (4) bewegbar ist durch das Auftreffen der in den Bereich des Wandungsdurchbruches (6) hineinragenden Teile (5A, 5B) oder Vorsprünge des Auslöse-Stiftes (5) auf die
in den Bereich des Wandungsdurchbruches (6) hineinragenden Teile (4A, 4B) oder Vorsprünge des Entriegelungs-Teiles (4).

2. Anordnung nach Anspruch 1,
**dadurch gekennzeichnet, daß**
ein Stirnkantenteil (5A, 5B) des Auslöse-Stiftes (5) in den Wandungsdurchbruch (6) hineinragt, welcher auf ein in den Wandungsdurchbruch hinein verformtes Teil (4A, 4B) des Entriegelungs-Teiles (4) drückbar ist.

3. Anordnung nach Anspruch 2,
**dadurch gekennzeichnet, daß**
das Entriegelungs-Teil (4) ein verformter Hohlzylinder ist, dessen eines Ende, welches der ringförmigen Haltenut (2-1) abgewandt ist, in den Bereich des Wandungsdurchbruches (6) eingedrückt ist , wobei Teile des eingedrückten Entriegelungs-Teiles (4) auf Stirnflächenteile des Auslöse-Stiftes (5) ausgerichtet sind, welche in den Aussparungsraum des Wandungsdurchbruches (6) hineinragen.

4. Anordnung nach Anspruch 1,
**dadurch gekennzeichnet,**
**daß** die Haltefederanordnung (3) ein Basisteil (3B) aufweist, von dessen Außenrand mindestens zwei sich zum freien Ende hin verjüngende und dachartig nach innen geneigte Blattfederarme (3-1, 3-2, 3-3, 3-4) ausgehen,
deren freie Enden (3-1-1, 3-2-1, 3-3-1, 3-4-1) in die ringförmige Haltenut (2-1) eingreifbar und durch das Entriegelungsteil (4) spreizbar sind.

5. Anordnung nach Anspruch 1 und 4,
**dadurch gekennzeichnet, daß**
das Basisteil (3B) nach außen weisende Vorsprünge (3V1, 3V2,3V3, 3V4) aufweist, welche anschlagbildend über die gedachte Öffnung des zweiten Bauteils (MP2) hinausreichen.

6. Anordnung nach einem der Ansprüche 4 - 5,
**dadurch gekennzeichnet, daß** die
Haltefederanordnung (3) einteilig ist.

7. Anordnung nach einem der Ansprüche 4-6, **dadurch gekennzeichnet, daß** die Haltefederanordnung aus Federstahlblech ist.

8. Anordnung nach einem der Ansprüche 4 bis 7,
**dadurch gekennzeichnet, daß**
das Basisteil (3B) eine Öffnung aufweist, in welcher eine Buchse (7) angeordnet ist.

9. Anordnung nach Anspruch 8,
**dadurch gekennzeichnet, daß**
die Öffnungen der Buchse (7) einen nach auswärts weisenden Rand (7A, 7B) aufweisen.

10. Anordnung nach einem der Ansprüche 8 bis 9,
**dadurch gekennzeichnet, daß**
auf der Buchse (7) ein Schwingungsdämpferring (8) aus elastischem Material angeordnet ist, der (8) eine konzentrisch zu seiner Achse angeordnete periphere Nut (N) aufweist zur gedachten Aufnahme des Randes der Öffnung im zweiten Bauteil (MP2), vorzugsweise mit einer Vulkanisations-Verbindung.

11. Anordnung nach einem der Ansprüche 1-10 **dadurch**
**gekennzeichnet, dass** der Wandungsdurchbruch (96) eine fensterartige Aussparung ist.

12. Anordnung nach einem der Ansprüche 1-10,
daß der Vorsprung (95-1, 95-2) des Entriegelungs-Teiles (94) ein Federhaken (95) und die Aussparung (93) des Auslöse-Stiftes (92) eine Ringnut ist.

13. Anordnung nach einem der Ansprüche 1-10, **dadurch gekennzeichnet, daß**
der Wandungsdurchbruch ein zum Halte-Bolzen(104)-Ende hin durchgehender Schlitz (101, 102) ist.

14. Anordnung nach Anspruch 13,
**dadurch gekennzeichnet, daß**
der Vorsprung des Entriegelungs-Teiles (103) durch den Schlitz (101, 102) ragende achswärts gerichtete Nasen (103-1, 103-2) sind und die Aussparung (104-1) des Auslöse-Stiftes (104) eine Ringnut ist.

## Claims

1. A connecting assembly for releasably connecting two components provided with mutually aligned openings, in which a retaining pin (2) is arranged in the bore of the component (MP1) to be joined, which projects through the opening of the other component (MP2) and has an annular retaining groove or an annular engagement zone into which, when the retaining pin is pressed into a retaining-spring assembly (3) which is connected with the second component (MP2), the free end of at least one leaf-spring arm engages, and
wherein
a displaceable unlocking member (4) is provided on the retaining pin for releasing the engagement of the leaf-spring arm in the retaining groove of the retaining pin, and
wherein
in the retaining pin an axially displaceable release pin (5) is provided, by which the unlocking member can be actuated in the vicinity of a wall opening in the retaining pin, and the unlocking member (4) is not permanently connected to the release pin (5)
**characterised in that**
upon displacing the release pin (5) towards the retaining-spring assembly (3) one part (5A,5B) or a projection of this release pin (5) projects into the region of the wall opening (6) and
**in that**
the unlocking member (4) or a projection thereof projects into the region of the wall opening (6), and
**in that**
the unlocking member (4) can be moved by the impingement of the parts (5a,5B) projecting into the region of the wall opening (6) or projections of the release pin (5) on to the members (4A, 4B) projecting into the region of the wall opening (6) or projections of the unlocking member (4).

2. An assembly according to Claim 1,
**characterised in that**
an end edge part (5A,5B) of the release pin (5) projects into the wall opening (6), which can be pressed on to a part (4A, 4B) of the unlocking member (4) deformed into the wall opening.

3. An assembly according to Claim 2,
**characterised in that**
the unlocking member (4) is a deformed hollow cylinder, one end of which, which is remote from the annular retaining groove (2-1), is pressed into the region of the wall opening (6), wherein parts of the pressed-in unlocking member (4) are aligned with end face parts of the release pin (5) which project into the recess space of the wall opening (6).

4. An assembly according to Claim 1,
**characterised in that**
the retaining-spring assembly (3) has a base member (3B), from the outer edge of which at least two leaf-spring arms (3-1, 3-2, 3-3, 3-4) extend tapering towards the free end and inclined inwardly in a roof-like manner,
and the free ends (3-1-1, 3-2-1, 3-3-1, 3-41,) of which can be engaged into the annular retaining groove (2-1) and can be spread by the unlocking member (4).

5. An assembly according to Claims 1 and 4,
**characterised in that**
the base member (3B) has outwardly facing projections (3V1,3V2,3V3,3V4) which extend beyond the assumed opening of the second component (MP2) to form abutments.

6. An assembly according to any one of Claims 4 to 5,
**characterised in that**
the retaining-spring assembly (3) is in one piece.

7. An assembly according to any one of Claims 4 to 6,
**characterised in that**
the retaining-spring assembly (3) is made of spring-steel sheet.

8. An assembly according to any one of Claims 4 to 7,
**characterised in that**
the base member (3B) is has an opening in which a bushing (7) is arranged.

9. An assembly according to Claim 8,
**characterised in that**
the openings of the bushing (7) have an outwardly facing edge (7A,7B).

10. An assembly according to any one of Claims 8 to 9,
**characterised in that**
a vibration-damping ring (8) made of elastic material is disposed on the bushing (7), which (8) has a peripheral groove (N) which is arranged concentrically to its axis and which is intended to receive the edge of the opening in the second component (MP2), preferably with a vulcanisation joint.

11. An assembly according to any one of Claims 1 to 10,
**characterised in that** the wall opening (96) is a window-like recess.

12. An assembly according to any one of Claims 1 to 10,
**characterised in that** the projection (95-1,95-2) of the unlocking member (94) is a spring hook (95) and the recess (93) of the release pin (92) is an annular groove.

13. An assembly according to any one of Claims 1 to 10,
**characterised in that** the wall opening is a slot (101, 102) continuing through towards the retaining pin (104) end.

14. An assembly according to Claim 13,
**characterised in that**
the projection of the unlocking member (103) is formed by lugs (103-1, 103-2) axially directed and projecting through the slot (101, 102), and the recess (104-1) of the release pin (104) is an annular groove.

## Revendications

1. Dispositif d'assemblage pour un assemblage démontable de deux pièces munies d'ouvertures alignées l'une par rapport à l'autre, et selon lequel on place un goujon de retenue (2) dans le perçage de l'une des pièces à assembler (MP1),
le goujon traversant l'ouverture de l'autre pièce (MP2) et comportant une rainure de retenue de forme annulaire ou une zone de prise de forme annulaire, dans lesquelles s'enfonce l'extrémité libre d'au moins un bras de ressort-lame lorsqu'on enfonce le goujon de retenue dans un dispositif de ressort de retenue (3) en liaison avec la seconde pièce (MP2), et
- une pièce de déverrouillage (4) est coulissante sur le goujon de retenue pour libérer la prise du bras de ressort-lame dans la rainure de retenue du goujon de retenue, et
- une broche de déclenchement (5) coulissant axialement dans le goujon de retenue peut être actionnée par la pièce de déverrouillage au niveau d'une traversée de paroi dans le goujon de retenue, et la pièce de déverrouillage (4) n'est pas reliée de manière solidaire à la broche de déclenchement (5),
dispositif **caractérisé en ce que**
lorsqu'on coulisse la broche de déclenchement (5) en direction du dispositif de ressort de retenue (3), une partie (5A, 5B) ou une partie en saillie de cette broche de déclenchement (5) pénètre dans la zone du passage de paroi (6), et
- la pièce de déverrouillage (4) ou une partie de celle-ci, pénètre dans la zone de l'ouverture de paroi (6), et
- la pièce de déverrouillage (4) est mobile par la rencontre des pièces (5A, 5B) venant dans la zone du passage de paroi (6) ou des saillies de la broche de déclenchement (5) sur les pièces (4A, 4B) qui viennent en saillie dans la zone de l'ouverture de paroi (6) ou les parties en saillie de la pièce de déverrouillage (4).

2. Dispositif selon la revendication 1,
**caractérisé en ce qu'**
une pièce d'arête frontale (5A, 5B) de la broche de déclenchement (5) pénètre dans le passage de la paroi (6) qui est poussée sur une pièce (4A, 4B) déformable dans l'ouverture de paroi de la pièce de déverrouillage (4).

3. Dispositif selon la revendication 2,
**caractérisé en ce que**
la pièce de déverrouillage (4) est un cylindre creux déformable dont une extrémité à l'opposé de la rainure de retenue de forme annulaire (2-1) peut être enfoncée dans la zone de l'ouverture de paroi (6),
les parties de la pièce de déverrouillage (4), enfoncées, étant alignées sur les parties de surface frontale de la broche de déclenchement (5) venant en saillie dans l'espace dégagé de l'ouverture de paroi (6).

4. Dispositif selon la revendication 1,
**caractérisé en ce que**
le dispositif de ressort de retenue (3) comporte une pièce de base (3B) avec, partant de son bord extérieur, au moins deux bras de ressort-lame allant en diminuant vers leur extrémité libre et inclinés vers l'intérieur en forme de toit (3-1, 3-2, 3-3, 3-4) et dont les extrémités libres (3-1-1, 3-2-1, 3-3-1, 3-4-1), pénètrent dans la rainure de retenue (2-1) de forme annulaire et peuvent être écartées par la pièce de déverrouillage (4).

5. Dispositif selon les revendications 1 et 4,
**caractérisé en ce que**
la pièce de base (3B) comporte des saillies (3V1, 3V2, 3V3, 3V4) dirigées vers l'extérieur et constituant des butées en dépassant l'ouverture fictive de la seconde pièce (MP2).

6. Dispositif selon l'une des revendications 4 et 5,
**caractérisé en ce que**
le dispositif de ressort de retenue (3) est en une seule partie.

7. Dispositif selon l'une des revendications 4 à 6,
**caractérisé en ce que**
le dispositif de retenue est en tôle d'acier à ressort.

8. Dispositif selon l'une des revendications 4 à 7,
**caractérisé en ce que**
la pièce de base (3B) comporte une ouverture recevant un manchon (7).

9. Dispositif selon la revendication 8,
**caractérisé en ce que**
les ouvertures du manchon (7) comportent un bord (7A, 7B) dirigé vers l'extérieur.

10. Dispositif selon l'une des revendications 8 à 9,
**caractérisé en ce qu'**
une bague d'amortissement de vibrations (8) est prévue sur le manchon (7), cette bague étant en matière élastique et la bague (8) comporte une rainure périphérique (N) concentrique à son axe pour recevoir de manière prévisible le bord de l'ouverture dans la seconde pièce (MP2) de préférence par une liaison vulcanisée.

11. Dispositif selon l'une des revendications 1 à 10,
**caractérisé en ce que**
l'ouverture (96) dans la paroi est une ouverture en forme de fenêtre.

12. Dispositif selon l'une des revendications 1 à 10,
**caractérisé en ce que**
la partie en saillie (95-1, 95-2) de la pièce de déverrouillage (94) est un crochet à ressort (95) et l'ouverture (93) de la broche de déclenchement (92) est une rainure annulaire.

13. Dispositif selon l'une des revendications 1 à 10,
**caractérisé en ce que**
l'ouverture de paroi est une fente (101, 102) continue vers l'extrémité du goujon de retenue (104).

14. Dispositif selon la revendication 13,
**caractérisé en ce que**
la partie en saillie de la pièce de déverrouillage (103) sont des becs (103-1, 103-2) dirigés vers l'axe à travers la fente (101, 102) et la cavité (104-1) de la broche de déclenchement (104) est une rainure annulaire.
